# EUROPEAN PATENT APPLICATION

(11) **EP 2 509 187 A1**
(43) Date of publication of application: **10.10.2012**
(21) Application number: 10842128.0
(22) Date of filing: 28.10.2010
(51) Int. Cl.: H02J 7/02, B60L 11/18, H01M 10/44, H02J 7/00

(54) **METHOD FOR MANAGEMENT OF CHARGING SECONDARY BATTERIES OF WORK VEHICLES, AND SYSTEM FOR CHARGING SECONDARY BATTERIES OF WORK VEHICLES**

(30) Priority: 05.01.2010 JP 2010000423
(71) Applicant: Mitsubishi Heavy Industries, Ltd., Tokyo 108-8215 (JP)
(72) Inventor: AKAHANE Fumihiro, Tokyo 108-8215 (JP); TSUMAKI Toshimichi, Tokyo 108-8215 (JP)
(74) Representative: Henkel, Breuer & Partner
(86) International application number: PCT/JP2010/069161
(87) International publication number: WO 2011/083613

(57) **Abstract**

Disclosed is a method for managing how to charge secondary batteries of work vehicles, the method involving: a step of acquiring the remaining battery levels of secondary batteries each supplying power to a plurality of work vehicles; a step of calculating an estimate of the power that each work vehicle is estimated to consume from the present moment until a predetermined time therefrom; a step of calculating index values for determining the order of priority according to which the batteries of the work vehicles are to be changed, the index value being calculated from the difference between the remaining battery levels of each secondary battery and the power consumption estimate; and a step of outputting a return command to the work vehicle that should return, based on the index values and the amount of charge that can be provided to the secondary batteries.

## Description

### TECHNICAL FIELD

The present invention relates to a management method for charging secondary batteries of work vehicles and a system for charging secondary batteries of work vehicles.
Priority is claimed on Japanese Patent Application No. 2010-000423, filed January 5, 2010, the content of which is incorporated herein by reference.

### BACKGROUND ART

A lead-acid battery to be installed in an electric work vehicle such as an electric forklift is not rapidly chargeable (fully charged within a few hours), but slowly charged for eight hours or more (a normal charging method free of load to the battery) in the case of continuous operation for up to about eight hours. The slow charge requires a charging time equal to or more than the operational time required for full charge.
Therefore, a user with a high rate of operation (a user who operates electric work vehicles for extended periods of time per vehicle, each in operation fully for twenty-four hours or almost for twenty-four hours per day) prepares, for each forklift, two to three units of lead-acid battery packs to be replaced. An installed lead-acid battery pack with no remaining battery level is replaced in rotation with a previously charged battery pack.

Where the lead-acid battery packs are prepared in two units, that is, one unit which is now installed in an electric work vehicle and the other unit which is to be replaced, it is necessary to immediately install the lead-acid battery pack in an electric work vehicle directly after an eight hour charge. However, the lead-acid battery pack is heated immediately after being charged, and therefore is required to be cooled by being left. If the lead-acid battery pack is immediately installed in the electric work vehicle and used without cooling, the service life of the battery pack will be noticeably affected. Therefore, many users (in particular those in Europe and the United States) prepare three units of lead-acid battery packs (one unit being installed and two other units as replacements) for one electric work vehicle in the case of twenty-four hour operation. That is, a total of three units of lead-acid battery packs are prepared, specifically, one unit installed in and used by an electric work vehicle for an eight hour operation, one unit for an eight hour charge by a battery charger, and one unit for eight hours of cooling after being charged, by which these battery packs are scheduled to be managed in rotation every eight hours.

Technologies disclosed in Patent Documents 1 to 3 have covered batteries used in electric forklifts which are electric work vehicles and replacement management of batteries. Of these technologies, for example, a system for charging a battery of a forklift shown in Cited Document 1 includes: a battery charger for charging the battery; detection means for detecting operation that the battery has been taken out to output a detection signal thereof; and control means for controlling the battery charger in response to the detection signal by the detection means. In this instance, initial charge after detection of the detection signal that the battery has been taken out is given as an equalizing charge to reduce damage to the battery.

### CITATION LIST

### [Patent Document]

Patent Document 1: Japanese Unexamined Patent Application, First Publication No. 2009-118596
Patent Document 2: Japanese Unexamined Patent Application, First Publication No. 2004-266892
Patent Document 3: Japanese Unexamined Patent Application, First Publication No. 2004-32869

### DISCLOSURE OF THE INVENTION

### Problems to be Solved by the Invention

Where lead-acid batteries are used in driving the above-described electric work vehicles, an extended period of time is required for charging the batteries. Additionally, these batteries are lead-acid batteries, and therefore are large in mass and troublesome in handling and management. Further, where the lead-acid batteries are scheduled to be managed in rotation as described above, a user who has four electric work vehicles needs four units of slow battery chargers (charging time for more than eight hours) and 12 units of lead-acid battery packs, that is, four electric work vehicles×three units of lead-acid battery packs per vehicle. This creates a problem for the users that valuable space inside a warehouse is taken up for charging and storing the batteries.

The present invention has been made in view of the above situations, an object of which is to provide a management method for charging secondary batteries of work vehicles and a system for charging the batteries which uses, for example, rapidly chargeable lithium ion batteries as secondary batteries installed in electric work vehicles, making more efficient a schedule for using, replacing, and charging in rotation the secondary batteries, thus making it possible to promote efficient management of the secondary batteries.

### Means for Solving the Problems

According to one aspect of the present invention, a management method for charging secondary batteries of work vehicles includes: a step of acquiring remaining battery levels of a plurality of secondary batteries which respectively supply powers to a plurality of work vehicles; a step of calculating estimated power consumptions of the plurality of work vehicles for a predetermined time from the current time; a step of calculating an index value for determining a priority order for replacing the plurality of secondary batteries of the plurality of work vehicles, by referring to differences between the remaining battery levels of the plurality of secondary batteries and the estimated power consumptions; and a step of outputting a return command to one of the plurality of work vehicles based on the index value and acceptable charge amounts by which the plurality of secondary batteries are respectively charged.

Additionally, according to another aspect of the present invention, a system for charging secondary batteries of work vehicles includes: a plurality of work vehicles respectively installed with a plurality of secondary batteries, the plurality of work vehicles being driven by powers respectively supplied from the plurality of secondary batteries; a charging base configured to communicate with the plurality of work vehicles and to charge the plurality of secondary batteries; a plurality of remaining battery level sensors respectively included in the plurality of work vehicles, the plurality of remaining battery level sensors being configured to measure remaining battery levels of the plurality of secondary batteries which supply powers respectively to the plurality of work vehicles; a plurality of power consumption sensors respectively included in the plurality of work vehicles, the plurality of power consumption sensors being configured to measure power consumptions of the plurality of work vehicles; and a communication unit configured to transmit, to the charging base, data obtained from the plurality of remaining battery level sensors and the plurality of power consumption sensors, and the communication unit being configured to transmit, from the charging base to the plurality of work vehicles, a return command for ordering a charging. The charging base includes: a controller configured to calculate, based on data received from the plurality of power consumption sensors and work schedule data for the plurality of work vehicles, estimated power consumptions of the plurality of work vehicles for a predetermined time from the current time, the controller being configured to determine a priority order for replacing the plurality of secondary batteries of the plurality of work vehicles by referring to differences between the estimated power consumptions calculated and the plurality of remaining battery levels of the plurality of secondary batteries, and the controller being configured to output a return command indicating that one of the plurality of work vehicles returns to the charging base according to the priority order.

### Effects of the Invention

According to the present invention, an index value for determining a priority order for replacing the batteries of the work vehicles is calculated by referring to differences between the remaining battery levels of the secondary batteries acquired from the work vehicles and the estimated power consumptions of the work vehicles calculated for a predetermined time from the current time. Then, a return command is output to one of the work vehicles based on the index value and the acceptable charge amount by which the secondary batteries can be respectively charged. Thus, the management of the work vehicles and the priority order for replacing the secondary batteries makes more efficient a schedule for using, replacing, and charging in rotation the secondary batteries installed in the work vehicle. Thereby, it is possible to promote efficient management of the secondary batteries. As a result, it is possible to manage the secondary batteries efficiently by eliminating the necessity for unnecessarily providing standby batteries as needed in a conventional case.

Additionally, according to the present invention, a schedule for managing a plurality of work vehicles and charging a plurality of secondary batteries respectively installed in the plurality of work vehicles is determined in advance based on usable runtimes of the secondary batteries and the acceptable charge amount by which the secondary batteries can be respectively charged by a battery charger, thereby making the work vehicles work according to the schedule. Thus, the system for charging secondary batteries of work vehicles and the management method for charging the batteries makes more efficient a schedule for using, replacing, and charging in rotation the secondary batteries installed in the work vehicles. Thereby, it is possible to promote efficient management of the secondary batteries. As a result, it is possible to efficiently manage the secondary batteries by eliminating the necessity for unnecessarily providing standby batteries as needed in a conventional case.

### BRIEF DESCRIPTION OF THE DRAWINGS

FIG. 1 is a general view illustrating a system for charging secondary batteries according to an embodiment 1.
FIG. 2 is a control block diagram, focusing mainly on a controller shown in FIG. 1.
FIG. 3 is a flow chart illustrating control details of the controller.
FIG. 4 is a time chart specifically illustrating a schedule for managing forklifts and charging lithium ion batteries according to the embodiment 1.
FIG. 5 is a general view illustrating a system for charging secondary batteries according to an embodiment 2.
FIG. 6 is a control block diagram, focusing mainly on a controller shown in FIG. 5.
FIG. 7 is a flow chart illustrating control details of the controller.
FIG. 8 is a time chart specifically illustrating a schedule for managing forklifts and charging lithium ion batteries according to the embodiment 2.

### BEST MODE FOR CARRYING OUT THE INVENTION

### [Embodiment 1]

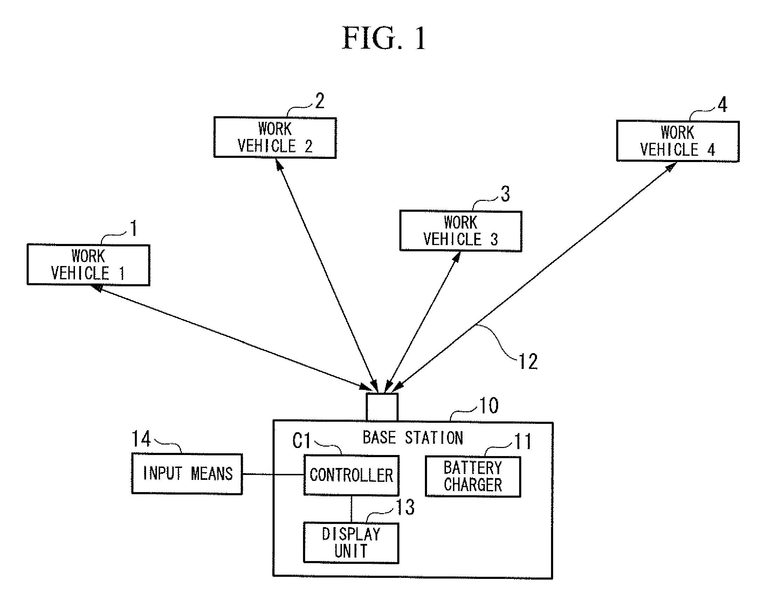

A management method for charging secondary batteries and a system for charging secondary batteries by using the management method for charging secondary batteries, which are shown as an embodiment 1 of the present invention, are explained with reference to FIGS. 1 to 4.

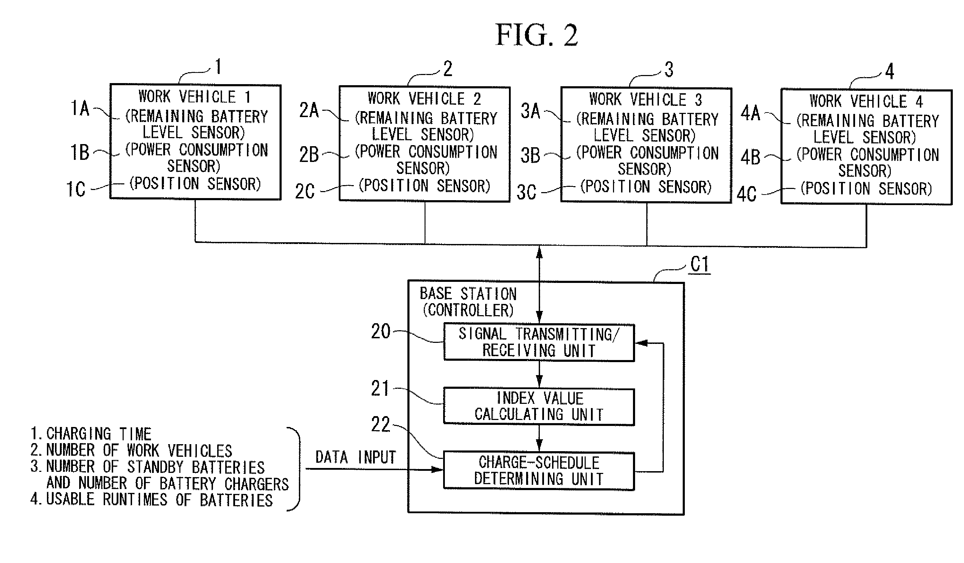

In the present embodiment, as shown in FIGS. 1 and 2, four forklifts which are electric work vehicles (which are shown as a work vehicle 1, a work vehicle 2, a work vehicle 3, and a work vehicle 4 in the drawings), five units of lithium ion batteries (batteries A to E) as secondary batteries which are rapidly chargeable, and one battery charger, are used.
Among the five units of lithium ion batteries, four units of them are installed individually in four forklifts in a state that the batteries have been completely charged, while one unit is used as a standby battery.

Further, the battery charger is able to rapidly charge the lithium ion batteries (batteries A to E). Generally, the battery charger gives a one-hour rapid charge to the lithium ion batteries, each of which is to be used for four hours, thus making it possible to use the batteries again for four hours. Where used for four hours, these lithium ion batteries are completely charged in one hour. Where used for eight hours, these lithium ion batteries are completely charged in two hours. In the present embodiment, however, a description will be given with respect to a case of "rapid charge" in which the lithium ion batteries are used (at the maximum) for four hours and, thereafter, are completely charged in one hour.

FIG. 1 is a schematic view illustrating the entire system for charging secondary batteries according to the present invention. The reference numerals 1 to 4 depict forklifts which are electric work vehicles (the work vehicle 1, the work vehicle 2, the work vehicle 3, and the work vehicle 4). The above-described lithium ion batteries (batteries A to E to be described later) are respectively installed in the forklifts 1 to 4. As shown in detail in FIG. 2, remaining battery level sensors 1A to 4A for measuring the remaining battery levels of the lithium ion batteries, power consumption sensors 1B to 4B for measuring power consumption of the forklifts 1 to 4, and position sensors 1C to 4C for indicating the positions of the forklifts 1 to 4 are respectively provided.

Further, the reference numeral 10 shown in FIG. 1 depicts a base station. The base station 10 is provided with a controller C1 for controlling the forklifts 1 to 4, and one battery charger 11 for charging the lithium ion batteries installed in the forklifts 1 to 4.
Moreover, communication means 12 is provided between the base station 10 and each of the forklifts 1 to 4. Data detected by the remaining battery level sensors 1A to 4A of the forklifts 1 to 4, the power consumption sensors 1B to 4B, and the position sensors 1C to 4C are supplied to the controller C1 through the communication means 12. On the other hand, a return command for charging the lithium ion batteries is to be output from the controller C1 to each of the forklifts 1 to 4.
In addition, the controller C1 is provided with a display unit 13 for displaying the results of calculation performed by the controller C1, and input means 14 for inputting various types of data.

As shown in FIG. 2, the controller C1 includes a signal transmitting/receiving unit 20, an index value calculating unit 21, and a charge-schedule determining unit 22. The signal transmitting/receiving unit 20 receives the data detected by the remaining battery level sensors 1A to 4A, the power consumption sensors 1B to 4B, and the position sensors 1C to 4C, from the forklifts 1 to 4 through the communication means 12. Additionally, the signal transmitting/receiving unit 20 also transmits to each of the forklifts 1 to 4, a return signal for charging batteries.

Further, based on the data detected by the remaining battery level sensors 1A to 4A, the power consumption sensors 1B to 4B, and the position sensors 1C to 4C, the index value calculating unit 21 of the controller C1 calculates an index value (Zn) which is a factor in determining which one of the forklifts 1 to 4 is made to return to the base station 10 for the battery charger 11 to charge the lithium ion batteries (batteries A to E). The above-described index value (Zn) is calculated by using a formula, for example, "Zn =Qn-(Ln+f(Wn))". Here, "Qn" is a value which indicates the remaining battery level for each of the lithium ion batteries (batteries A to E) based on the data detected by the remaining battery level sensors 1A to 4A. "Ln" is a value which indicates electrical energy which is necessary for the forklifts 1 to 4 outside to return to the base station 10 and calculated by referring to the data detected by the position sensors 1C to 4C and a previously stored power consumption value per unit time. Additionally, "f (Wn)" is a value which indicates an amount of power consumption for a predetermined short time (for example, 10 minutes from now), and is calculated based on the data detected by the power consumption sensors 1B to 4B.

Moreover, the charge-schedule determining unit 22 of the controller C1 compares an index value (Zn) calculated by the index value calculating unit 21 with an index value (Zn) calculated for each of the forklifts 1 to 4, thereby making a priority order for battery replacement by referring to the extent of drain on the lithium ion batteries (batteries A to E). Additionally, according to the priority order, the charge-schedule determining unit 22 outputs a command for making one of the forklifts 1 to 4 which is associated with the minimum index value (Zn) return to the base station 10. Then, based on the return command, such work is done that the lithium ion battery installed in the associated one of the forklifts 1 to 4 is replaced with a lithium ion battery which has already been charged by the battery charger 11.

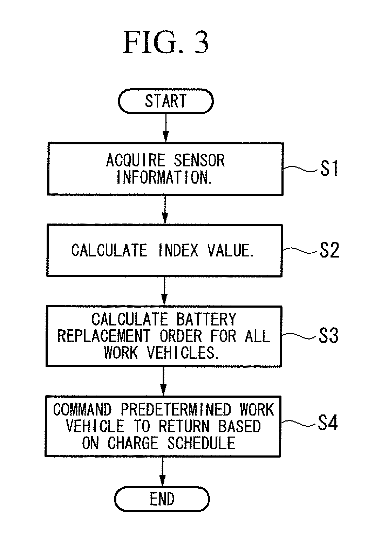

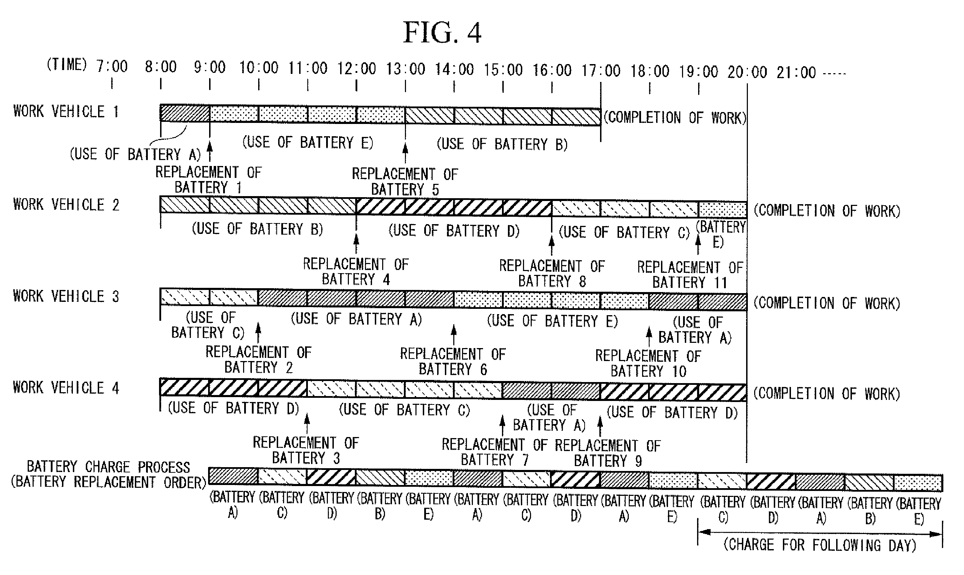

Here, work details of the forklifts 1 to 4 and procedures for replacing the lithium ion batteries A to E are explained with reference to the process steps of the controller C1 shown in FIG. 3 and the time chart shown in FIG. 4.

It is assumed in the time chart shown in FIG. 4 that, first, the lithium ion batteries A to D are installed respectively in the forklifts 1 to 4, and the lithium ion battery E is prepared as a standby battery. Further, it is assumed that, in starting cargo handling work by the forklifts 1 to 4 (starting at 8 am), each of the lithium ion batteries A to E is assumed to be fully charged in advance. Moreover, the process of replacing the lithium ion batteries shown in the time chart of FIG. 4 is carried out based on: (1) a time required for the battery charger 11 to charge the lithium ion batteries A to E (one hour in the present embodiment); (2) the number of forklifts 1 to 4 (four forklifts in the present embodiment); (3) the number of standby batteries and the number of the battery chargers 11 (one each in the present embodiment); and (4) the maximum usable runtimes (of the lithium ion batteries A to D) on normal operation of the forklifts (four hours in the present embodiment). Data covering the above descriptions of (1) to (4) will be input in advance to the controller C1 through the input means 14.

### (Step 1)

After start of all the forklifts at 8 am, data detected by the remaining battery level sensors 1A to 4A, the power consumption sensors 1B to 4B, and the position sensors 1C to 4C are received from the forklifts I to 4 at predetermined time intervals (intervals of five minutes, for example).

### (Step 2)

Based on the reception of the data in Step 1, an index value (Zn) for each of the forklifts 1 to 4 is calculated at every predetermined time interval (intervals of five minutes, for example) by referring to the previously described calculation formula.

### (Step 3 to Step 4)

Index values (Zn) for the respective forklifts 1 to 4 calculated in Step 2 are compared to make a priority order for battery replacement by referring to the extent of drain on the lithium ion batteries (batteries A to E) (Step 3). Thereafter, one of the forklifts 1 to 4 which is higher in priority order is made to return to the base station 10 to replace the lithium ion battery thereof (Step 4).
More specifically, as shown in the time chart of FIG.4, if it is determined that, for example, at 9 am, the forklift 1 is engaged in work very high in load and the lithium ion battery A is greatly drained as compared with other lithium ion batteries B to E, the forklift 1 is made to return to the base station 10, and the battery thereof is replaced with the lithium ion battery E which has been charged in advance from 8 am as a standby battery. Then, here, the lithium ion battery A which has been removed from the forklift 1 is charged by the battery charger 11.

Thereafter, if it is determined that at 10 am, the forklift 3 is engaged in work high in load and the lithium ion battery C is greatly drained as compared with other lithium ion batteries, the forklift 3 is made to return to the base station 10, and the battery thereof is replaced with the lithium ion battery A which has been previously charged. Then, here, the lithium ion battery C which has been removed from the forklift 3 is charged by the battery charger 11.
Thereafter, if it is determined that at 11 am, the forklift 4 is engaged in work high in load and the lithium ion battery D is greatly drained as compared with other lithium ion batteries, the forklift 4 is made to return to the base station 10, and the battery thereof is replaced with the lithium ion battery C which has been previously charged. Then, here, the lithium ion battery D which has been removed from the forklift 4 is charged by the battery charger 11. Then, the lithium ion batteries are replaced repeatedly according to the extent of drain on the batteries as described above. Thus, the forklifts 1 to 4 can be engaged in the work continuously.

Here, the charge process by the battery charger 11 as described above is influenced by the number of battery chargers 11 and a charging time. Therefore, in the above steps, based on the acceptable charge amount by which each of the lithium ion batteries can be charged by the battery charger 11 (the acceptable charge amount indicating that one lithium ion battery can be charged for one hour), the above-described priority order for replacing the lithium ion batteries A to E (refer to the lower column of FIG. 4) is determined. Additionally, after completion of the cargo handling work by the forklifts 1 to 4, as shown at the end of the charge process, all the lithium ion batteries A to E are fully charged in preparation for the process to be done on the following day.

As explained above in detail, according to the system for charging secondary batteries of electric work vehicles and the management method for charging secondary batteries shown in the embodiment 1 of the present invention, by referring to a difference between the estimated power consumption for each of the plurality of forklifts 1 to 4 which is calculated for a predetermined time from the current time, and the remaining battery level for each of the lithium ion batteries A to E, an index value for determining a priority order for replacing the lithium ion batteries A to E respectively installed in the plurality of forklifts 1 to 4 is calculated. Thereafter, based on the index value and the acceptable charge amounts by which the respective lithium ion batteries A to E can be charged by the battery charger 11, a return command is output to one of the forklifts 1 to 4 which should return. In other words, the schedule for using, replacing, and charging in rotation the lithium ion batteries A to E respectively installed in the forklifts 1 to 4 is made more efficient by the above-described system for charging secondary batteries of electric work vehicles and the management method for charging secondary batteries. It is, thereby, possible to promote efficient management of the lithium ion batteries A to E. As a result, it is possible to manage the secondary batteries efficiently by eliminating the necessity for unnecessarily providing standby batteries as needed in a conventional case.

The replacement order of the lithium ion batteries A to E as shown in the time chart of FIG. 4 is limited by the acceptable charge amount by which each of the lithium ion batteries can be charged by the battery charger 11 (the acceptable charge amount indicating that one lithium ion battery can be charged for one hour). It is, therefore, expected depending on the situation that the plurality of lithium ion batteries A to E wait in order for their turn to be charged. This situation may be handled in a manner, for example, that the batteries are not fully charged but only partially charged, any one of the forklifts 1 to 4 is halted for operation, another lithium ion battery is additionally provided as a standby battery, and another battery charger 11 is additionally provided.

Additionally, if it is determined that an index value (Zn) for each of the forklifts 1 to 4 calculated in Step 2 is negative, that is, a problem arises in completing work that is now in progress due to a shortage in the remaining battery levels, the work is stopped, the schedule is changed (waiting until a scheduled time), and, for example, any one of the forklifts 1 to 4 which is not short in remaining battery level may be used as a substitute to continue the work.

Further, in the above-described embodiment 1, a description has been made with reference to the forklifts 1 to 4 taken as examples, to which the present invention shall not be limited. The present invention may be applied to electric work vehicles such as electric vehicles and electric carts.
In this instance, where the present invention is applied to an electric vehicle which travels a great distance, for example, several dozens of kilometers or several hundreds of kilometers to carry cargo, the index (Zn) is constantly monitored so that a lithium ion battery installed in the electric vehicle will not drain while traveling, thus making it possible to prevent trouble such as a halt in traveling during the work.

Moreover, FIG. 4 shows one example of the management of the plurality of forklifts 1 to 4 and the order of charging the lithium ion batteries A to E. As a matter of course, modifications may be made, whenever necessary, depending on the data details of the above-descriptions of (1) to (4) and the index value (Zn) which will be changed from moment to moment with work loads.

### [Embodiment 2]

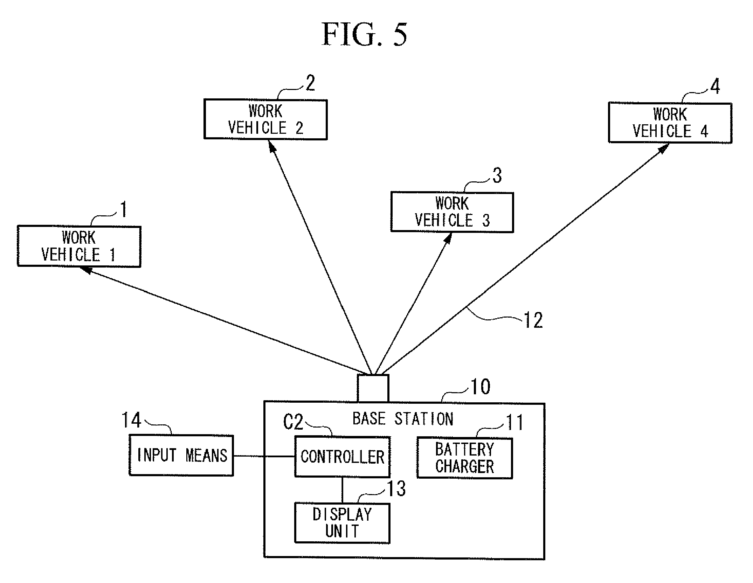

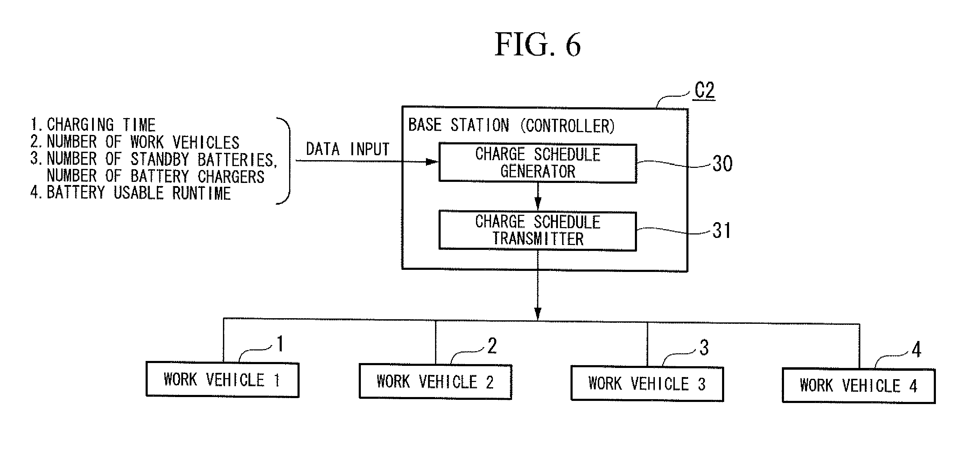

A management method for charging secondary batteries and a system for charging secondary batteries by using the management method for charging secondary batteries shown as an embodiment 2 of the present invention are explained with reference to FIGS. 5 to 8. The embodiment 2 is different from the embodiment 1 in that the order for replacing batteries is not determined based on a value detected by a sensor installed in each of the forklifts 1 to 4, and that batteries are replaced according to a predetermined schedule for replacing the batteries.
Further, a technical matter common to the embodiment 1 is that management of the plurality of forklifts 1 to 4, and the lithium ion batteries A to E are determined in advance based on the acceptable charge amount by which the lithium ion batteries A to E can be charged by the battery charger 11 (for example, the acceptable charge amount indicating that one lithium ion battery can be charged in one hour).

FIG. 5 is a general view illustrating the entire constitution of the embodiment 2. This drawing is different from FIG. 1 in that no sensors are installed in the forklifts 1 to 4, in addition to that control details of a controller indicated by a reference numeral C2 are different.

Here, the controller C2 of the embodiment 2 includes: a schedule generating unit 30 which determines in advance a schedule for managing the plurality of forklifts 1 to 4 and charging the lithium ion batteries A to E based on usable runtimes of the lithium ion batteries A to E respectively installed in the plurality of forklifts I to 4, and the acceptable charge amount by which each of the lithium ion batteries A to E can be charged by the battery charger 11; and a schedule transmitting unit 31 which makes the forklifts 1 to 4 carry out the work thereof in accordance with the schedule for managing the forklifts 1 to 4 and charging the lithium ion batteries A to E, which is generated by the schedule generating unit 30.

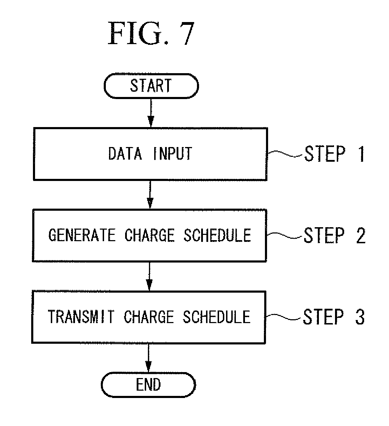

Here, the control details of the controller C2 in a step wise manner are shown in FIG. 7.

### (Step 1)

First, in Step 1, various types of data necessary for determining in advance the schedule for managing the forklifts 1 to 4 and charging the lithium ion batteries A to E are input through the input means 14. The data to be input here includes: (1) a charging time required for the battery charger 11 to charge the lithium ion batteries A to E (one hour in the present embodiment); (2) the number of forklifts 1 to 4 (four forklifts in the present embodiment); (3) the number of standby batteries and the number of the battery chargers 11 (one each in the present embodiment); and (4) the maximum usable runtimes (of the lithium ion batteries A to D) on normal operation of the forklifts (four hours in the present embodiment).

### (Step 2)

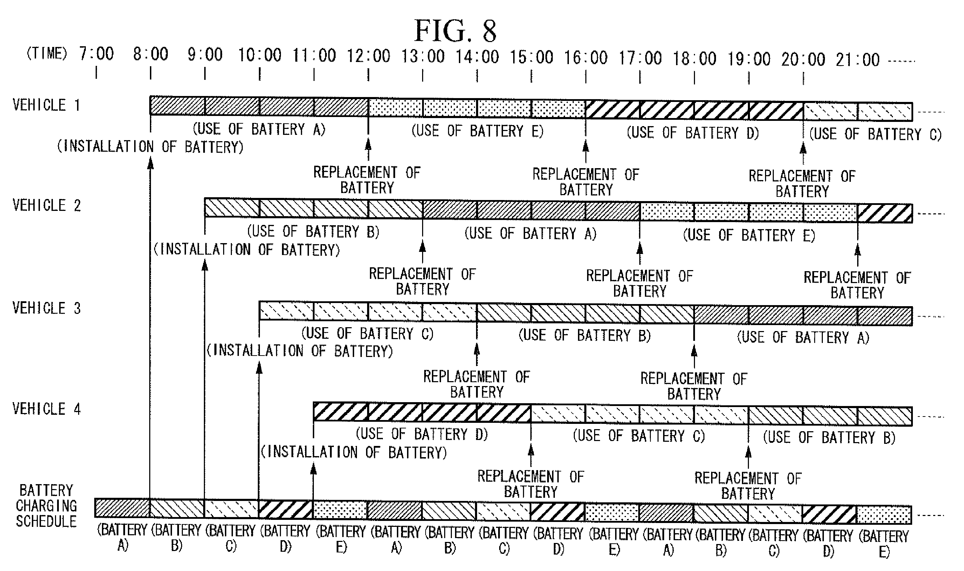

Next, based on the usable runtimes of the lithium ion batteries A to E respectively installed in the plurality of forklifts 1 to 4 and the acceptable charge amount by which each of the lithium ion batteries A to E can be charged by the battery charger 11 (from the data input in Step 1), the schedule generating unit 30 determines in advance the schedule for managing the plurality of forklifts 1 to 4 and charging the lithium ion batteries A to E (refer to FIG. 8).
More specifically, as shown in FIG.8, in order for the battery charger 11 to be able to sequentially charge each of the lithium ion batteries A to E every one hour, charge of the lithium ion battery A to be installed in the forklift 1 is at first started from 7 am which is one hour before the start of work. Then, at 8 am, the lithium ion battery A is installed in the forklift 1, and the forklift 1 is started. Thereafter, charge of the lithium ion battery B to be used in the next forklift 2 is started. Then, at 9 am, the lithium ion battery B is installed in the forklift 2, and the forklift 2 is started. Thereafter, charge of the lithium ion battery C to be used in the next forklift 3 is started. Thereafter, at 10 am, the lithium ion battery C is installed in the forklift 3, and the forklift 3 is started. Then, charge of the lithium ion battery D to be used in the next forklift 4 is started.
Thereafter, at 11 am, the lithium ion battery D is installed in the forklift 4, and the forklift 4 is started. Then, charge of the lithium ion battery E (as a standby battery) to be used in the forklift 1 which has already started work and is expected to return at 12 pm is started. Thereafter, at 12 pm, the lithium ion battery E is installed in the forklift 1 which has returned after four hours of work. Additionally, the forklift 1 is started and charge of the lithium ion battery A which has been removed from the forklift 1 is also started. Thus, a schedule is determined.
Then, the above processes are sequentially repeated, by which the forklifts 1 to 4 can be engaged in cargo handling work and the lithium ion batteries A to E can be charged by the battery charger 11 continuously without interruption.

### (Step 3)

Before start of work, the schedule for managing the forklifts 1 to 4 and charging the lithium ion batteries A to E, which is determined in the previous step and as shown in FIG. 8, is transmitted through the communication means 12 to each of the forklifts 1 to 4. Thereby, the cargo handling work is done by the forklifts 1 to 4 and the lithium ion batteries A to E are charged according to the schedule.

As described so far in detail, according to the system for charging secondary batteries of electric work vehicles and the management method for charging secondary batteries shown in the embodiment 2 of the present invention, the schedule for managing the plurality of forklifts 1 to 4 and charging the lithium ion batteries A to E is determined in advance based on the usable runtimes of the lithium ion batteries A to E respectively installed in the plurality of forklifts 1 to 4 and the acceptable charge amount by which each of the lithium ion batteries A to E can be charged by the battery charger. Then, according to the schedule, cargo handling work is done by the forklifts 1 to 4 and the lithium ion batteries A to E are charged. In other words, the system for charging secondary batteries of work vehicles and the management method for charging secondary batteries make more efficient the schedule for using, replacing, and charging in rotation the lithium ion batteries A to E to be installed in the forklifts 1 to 4. It is also possible to promote efficient management of the lithium ion batteries A to E. As a result, the secondary batteries can be efficiently managed by eliminating the necessity for unnecessarily providing standby batteries as needed in a conventional case.

FIG 8 shows one example covering the schedule for managing the plurality of forklifts 1 to 4 and charging the lithium ion batteries A to E. As a matter of course, modifications may be made to the schedule, whenever necessary, depending on the data details of the above descriptions of (1) to (4).

Additionally, in the above-described embodiment 2, a description has been made with respect to the forklifts 1 to 4 taken as examples, to which the present invention shall not be limited. The present invention may be applied to electric work vehicles such as electric vehicles and electric carts.

A description has been made in detail for the embodiments of the present invention with reference to the drawings. However, specific configuration of the present invention shall not be limited thereto, but various design modifications may be made without departing from the scope of the present invention.

### INDUSTRIAL APPLICABILITY

The present invention relates to electric work vehicles such as forklifts, electric vehicles, electric carts, and the like, which are driven by rechargeable batteries, in particular, making more efficient a schedule for using, replacing, and charging in rotation the rechargeable batteries installed in electric work vehicles.

### DESCRIPTION OF REFERENCE NUMERALS

1: forklift (work vehicle 1)
2: forklift (work vehicle 2)
3: forklift (work vehicle 3)
4: forklift (work vehicle 4)
1A to 4A: remaining battery level sensors
1B to 4B: power consumption sensors
C1: controller
C2: controller
A: lithium ion battery
B: lithium ion battery
C: lithium ion battery
D: lithium ion battery
E: lithium ion battery (standby battery)

## Claims

1. A management method for charging secondary batteries of work vehicles, comprising:
a step of acquiring remaining battery levels of a plurality of secondary batteries which respectively supply powers to a plurality of work vehicles;
a step of calculating estimated power consumptions of the plurality of work vehicles for a predetermined time from the current time;
a step of calculating an index value for determining a priority order for replacing the plurality of secondary batteries of the plurality of work vehicles, by referring to differences between the remaining battery levels of the plurality of secondary batteries and the estimated power consumptions; and
a step of outputting a return command to one of the plurality of work vehicles based on the index value and acceptable charge amounts by which the plurality of secondary batteries are respectively charged.

2. The management method for charging secondary batteries of work vehicles according to claim 1, further comprising:
a step of stopping a work in progress and changing a schedule if it is determined that a problem arises in completing the work due to a shortage in the remaining battery levels of the plurality of the secondary batteries.

3. The management method for charging secondary batteries of work vehicles according to claim 1, wherein the estimated power consumptions comprise an amount of power consumption necessary for one of the plurality of work vehicles to return to a base.

4. A management method for charging secondary batteries of work vehicles, comprising:
a step of determining in advance a schedule for managing a plurality of work vehicles and charging a plurality of secondary batteries respectively installed in the plurality of work vehicles based on usable runtimes of the plurality of secondary batteries and acceptable charge amounts by which the plurality of secondary batteries are respectively charged by a battery charger; and
a step of making the plurality of work vehicles carry out work according to the schedule for managing the plurality of work vehicles and charging the plurality of secondary batteries.

5. The management method for charging secondary batteries of work vehicles according to claim 4, further comprising:
a step of starting the plurality of work vehicles at regular time intervals based on the schedule for managing the plurality of work vehicles and charging the plurality of secondary batteries.

6. The management method for charging secondary batteries of work vehicles according to claim 1, wherein the plurality of secondary batteries comprises a lithium ion battery.

7. The management method for charging secondary batteries of work vehicles according to claim 1, wherein the plurality of work vehicles comprises an electric forklift.

8. A system for charging secondary batteries of work vehicles, comprising:
a plurality of work vehicles respectively installed with a plurality of secondary batteries, the plurality of work vehicles being driven by powers respectively supplied from the plurality of secondary batteries;
a charging base configured to communicate with the plurality of work vehicles and to charge the plurality of secondary batteries;
a plurality of remaining battery level sensors respectively included in the plurality of work vehicles, the plurality of remaining battery level sensors being configured to measure remaining battery levels of the plurality of secondary batteries which supply powers respectively to the plurality of work vehicles;
a plurality of power consumption sensors respectively included in the plurality of work vehicles, the plurality of power consumption sensors being configured to measure power consumptions of the plurality of work vehicles; and
a communication unit configured to transmit, to the charging base, data obtained from the plurality of remaining battery level sensors and the plurality of power consumption sensors, and the communication unit being configured to transmit, from the charging base to the plurality of work vehicles, a return command for ordering a charging,
wherein the charging base comprises:
a controller configured to calculate, based on data received from the plurality of power consumption sensors and work schedule data for the plurality of work vehicles, estimated power consumptions of the plurality of work vehicles for a predetermined time from the current time, the controller being configured to determine a priority order for replacing the plurality of secondary batteries of the plurality of work vehicles by referring to differences between the estimated power consumptions calculated and the plurality of remaining battery levels of the plurality of secondary batteries, and the controller being configured to output a return command indicating that one of the plurality of work vehicles returns to the charging base according to the priority order.

9. The system for charging secondary batteries of work vehicles according to claim 8, wherein if it is determined that a problem arises in completing work in progress due to a shortage in the plurality of remaining battery levels of the plurality of secondary batteries, the work is stopped and a schedule is changed.

10. The system for charging secondary batteries of work vehicles according to claim 8, wherein the estimated power consumptions comprise an amount of power consumption necessary for one of the plurality of work vehicles to return to the charging base.

11. A system for charging secondary batteries of work vehicles, comprising:
a schedule generating unit configured to determine in advance a schedule for managing a plurality of work vehicles and charging a plurality of secondary batteries respectively installed in the plurality of work vehicles based on usable runtimes of the plurality of secondary batteries and acceptable charge amounts by which the plurality of secondary batteries are respectively charged by a battery charger; and
a schedule transmitting unit configured to make the plurality of work vehicles carry out work in accordance with the schedule for managing the plurality of work vehicles and charging the plurality of secondary batteries.

12. The system for charging secondary batteries of work vehicles according to claim 11, wherein the plurality of work vehicles are started at regular time intervals based on the schedule for managing the plurality of work vehicles and charging the plurality of secondary batteries.

13. The system for charging secondary batteries of work vehicles according to claim 8, wherein the plurality of secondary batteries comprises a lithium ion battery.

14. The system for charging secondary batteries of work vehicles according to claim 8, wherein the plurality of work vehicles comprises an electric forklift.
